# EUROPEAN PATENT APPLICATION

(11) **EP 4 503 832 A1**
(43) Date of publication of application: **05.02.2025**
(21) Application number: 23794881.5
(22) Date of filing: 22.03.2023
(51) Int. Cl.: H04W 74/08

(54) **PRACH TRANSMISSION OPPORTUNITY DETERMINATION METHOD, UE, AND COMPUTER READABLE STORAGE MEDIUM**

(30) Priority: 27.04.2022 CN 202210449961
(71) Applicant: Sanechips Technology Co., Ltd., Shenzhen, Guangdong 518055 (CN)
(72) Inventor: SHANGGUAN, Weiwei, Shenzhen, Guangdong 518055 (CN)
(74) Representative: Chimini, Francesco
(86) International application number: PCT/CN2023/083140
(87) International publication number: WO 2023/207446

(57) **Abstract**

A PRACH transmission occasion determination method, UE, and a computer readable storage medium are provided. The PRACH transmission occasion determination method includes: acquiring a System Information Block (SIB) sent by a base station, wherein the SIB comprises one or more Synchronization Signal Blocks (SSBs) and PRACH configuration index information, and the PRACH configuration index information comprises PRACH transmission occasions (S110); generating a relationship mapping table, wherein the relationship mapping table represents a mapping relationship between the one or more SSBs and the PRACH transmission occasions (S120); determining a target SSB from the one or more SSBs according to a preset condition (S130); and determining a PRACH transmission occasion corresponding to the target SSB in the relationship mapping table as a target PRACH transmission occasion (S140).

## Description

### Cross-Reference to Related Application

The present application is based upon and claims the benefit of priority from Chinese Patent Application No. 202210449961.5, filed on April 27, 2022, the entire disclosure of which is incorporated herein by reference.

### Technical Field

The present disclosure relates to, but is not limited to, the technical field of wireless communications, and in particular, to a Physical Random Access Channel (PRACH) transmission occasion determination method, User Equipment (UE), and a computer readable storage medium.

### Background

In a synchronization process of a 5th Generation (5G) New Radio (NR) system, after receiving a System Information Block (SIB), a UE selects a reception beam of a target Synchronization Signal Block (SSB) and then sends a preamble of random access on a Physical Random Access Channel (PRACH), so as to establish a signaling connection between the UE and a base station. A transmission occasion for the UE to send the preamble on the PRACH, i.e., a PRACH transmission occasion, needs to satisfy the following conditions: first, the PRACH transmission occasion needs to be in an uplink subframe; secondly, the PRACH transmission occasion needs to be subsequent to a time domain position of the SSB; thirdly, the PRACH transmission occasion needs to conform to a time domain position corresponding to Table 6.3.3.2-3 in the 3rd Generation Partnership Project (3GPP) protocol 38.211. In some cases, when determining the PRACH transmission occasion, screening calculation needs to be performed according to the above three conditions, and the involved calculation process is relatively complex and the time cost is relatively high, which puts forward a higher requirement on the real-time performance of a baseband chip.

### Summary

The following is a summary of the subject matter described in detail in the present disclosure. This summary is not intended to limit the scope defined by the appended set of claims.

A PRACH transmission occasion determination method, UE, and a computer readable storage medium are provided in the embodiments of the present disclosure.

According to a first aspect of the embodiments of the present disclosure, provided is a PRACH transmission occasion determination method, including: acquiring a System Information Block (SIB) sent by a base station, wherein the SIB includes one or more Synchronization Signal Blocks (SSBs) and PRACH configuration index information, and the PRACH configuration index information includes PRACH transmission occasions; generating a relationship mapping table, wherein the relationship mapping table represents a mapping relationship between the one or more SSBs and the PRACH transmission occasions; determining a target SSB from the one or more SSBs according to a preset condition; and determining a PRACH transmission occasion corresponding to the target SSB in the relationship mapping table as a target PRACH transmission occasion.

According to a second aspect of the embodiments of the present disclosure, provided is UE, including: a memory, a processor and a computer program stored in the memory and capable of running on the processor, wherein the processor, when executing the computer program, is configured to implement the PRACH transmission occasion determination method according to the first aspect.

According to a third aspect of the embodiments of the present disclosure, provided is a computer readable storage medium, storing computer executable instructions, wherein the computer executable instructions are used for executing the PRACH transmission occasion determination method according to the first aspect.

Additional features and advantages of the present disclosure will be set forth in the description that follows, and in part will be obvious from the description, or may be learned by practice of the disclosure. The objectives and other advantages of the present disclosure may be realized and attained by the structure particularly provided in the description, claims and drawings.

### Brief Description of the Drawings

The accompanying drawings are used for providing a further understanding of the technical solutions of the present disclosure, constitute a part of the description, and are used for explaining the technical solutions of the present disclosure together with the embodiments of the present disclosure, but do not constitute a limitation to the technical solutions of the present disclosure.
Fig. 1 is a flowchart of a PRACH transmission occasion determination method according to an embodiment of the present disclosure;
Fig. 2 is a flowchart illustrating exemplary operations for generating a relationship mapping table according to another embodiment of the present disclosure;
Fig. 3 is a flowchart illustrating exemplary operations for determining available PRACH transmission occasions from PRACH transmission occasions according to another embodiment of the present disclosure;
Fig. 4 is a flowchart illustrating exemplary operations for mapping one or more SSBs to available PRACH transmission occasions according to another embodiment of the present disclosure;
Fig. 5 is a flowchart illustrating exemplary operations for mapping one or more SSBs to available PRACH transmission occasions according to still another embodiment of the present disclosure;
Fig. 6 is a flowchart illustrating exemplary operations for determining a target PRACH transmission occasion from a relationship mapping table according to another embodiment of the present disclosure;
Fig. 7 is a flowchart illustrating exemplary operations for acquiring target PRACH transmission time according to another embodiment of the present disclosure;
Fig. 8 is a flowchart illustrating exemplary operations for transmitting a preamble according to another embodiment of the present disclosure;
Fig. 9 is a schematic diagram of modules of UE according to another embodiment of the present disclosure;
Fig. 10 is a flowchart illustrating exemplary operations for determining target PRACH transmission time according to another embodiment of the present disclosure;
Fig. 11 is a flowchart illustrating exemplary operations for implementing mapping between an SSB and available PRACH transmission occasions according to another embodiment of the present disclosure;
Fig. 12 is a flowchart illustrating exemplary operations for determining a target PRACH transmission occasion from available PRACH transmission occasions according to another embodiment of the present disclosure;
Fig. 13 is a structural diagram of UE according to another embodiment of the present disclosure.

### Detailed Description

To make the objectives, technical solutions, and advantages of the present disclosure clearer and more comprehensible, the technical solution of the present disclosure is described in detail with reference to the accompanying drawings and embodiments. It should be understood that the embodiments described herein are only intended to explain the present disclosure, but not to limit the present disclosure.

It should be noted that, although functional module division is presented in a schematic diagram of the device/apparatus and a logic sequence is shown in the flowchart, in some cases, a module division different from that shown in the schematic diagram of the device/apparatus, or a sequence different from that shown in the flowchart, may be adopted to execute the shown or described operations. The terms "first" and "second" in the description, the claims, or the foregoing drawings are used to distinguish similar objects, and are not necessarily used to describe a specific sequence or order.

A PRACH transmission occasion determination method, UE, and a storage medium are provided in the embodiments of the present disclosure. The PRACH transmission occasion determination method includes: acquiring a System Information Block (SIB) sent by a base station, wherein the SIB includes one or more Synchronization Signal Blocks (SSBs) and PRACH configuration index information, and the PRACH configuration index information includes PRACH transmission occasions; generating a relationship mapping table, wherein the relationship mapping table represents a mapping relationship between the one or more SSBs and the PRACH transmission occasions; determining a target SSB from the one or more SSBs according to a preset condition; and determining a PRACH transmission occasion corresponding to the target SSB in the relationship mapping table as a target PRACH transmission occasion. According to the solution provided in the embodiments of the present disclosure, after selecting a target SSB, an available PRACH transmission occasion corresponding to the target SSB is searched and selected from a relationship mapping table as a target PRACH transmission occasion. Compared with the technical solution that a comparison calculation needs to be performed according to multiple screening conditions to acquire a target PRACH transmission occasion, the technical solution provided in the embodiments of the present disclosure may effectively save the calculation time of the PRACH transmission occasion, thereby ensuring the real-time performance of a baseband chip.

The embodiments of the present disclosure will be further described below with reference to the accompanying drawings.

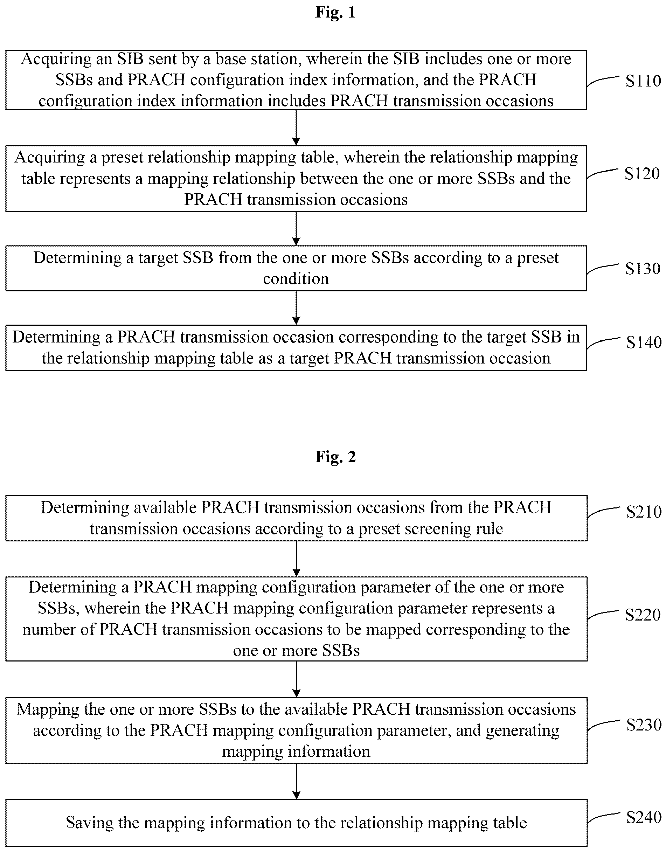

Fig. 1 is a flowchart of a PRACH transmission occasion determination method according to an embodiment of the present disclosure. As shown in Fig. 1, the PRACH transmission occasion determination method includes, but is not limited to, the following operations S110 to S140.

In operation S110, a System Information Block (SIB) sent by a base station is acquired, wherein the SIB includes one or more Synchronization Signal Blocks (SSBs) and PRACH configuration index information, and the PRACH configuration index information includes PRACH transmission occasions.

It may be understood that the SIB includes one or more SBSs and PRACH configuration index information, and the PRACH configuration index information may be, for example, a PRACH Configuration Index parameter, and includes PRACH transmission occasions. The information contained in the SIB may provide an effective data basis for generating a relationship mapping table representing a mapping relationship between the one or more SSBs and the PRACH transmission occasions.

In operation S120, a preset relationship mapping table is acquired, wherein the relationship mapping table represents a mapping relationship between the one or more SSBs and the PRACH transmission occasions.

It may be understood that, after acquiring the one or more SSBs and the PRACH transmission occasions from the SIB, the mapping relationship table representing the mapping relationship between the one or more SSBs and the PRACH transmission occasions may be acquired, thereby providing an effective data basis for a UE to determine a PRACH transmission occasion after determining a target SSB.

In operation S130, a target SSB is determined from the one or more SSBs according to a preset condition.

It should be noted that, the embodiments of the present disclosure do not limit the specific preset condition for determining the target SSB from the one or more SSBs. The one or more SSBs in the SIB may be a plurality of SSBs detected by a UE (the specific number of SSBs in the SIB is not limited in the embodiments of the present disclosure). An SSB with a maximum Reference Signal Receiving Power (RSRP) value may be selected from the plurality of SSBs as the target SSB; or in a case where there are two or more SSBs with the same RSRP value in the SIB, an SSB is randomly selected from the two or more SSBs with the same RSRP value as the target SSB. It may be understood that, selecting an SSB with a relatively high RSRP value as the target SSB may enable the UE to subsequently access a serving cell with relatively high signal strength, thereby better meeting a service requirement of 5G.

In operation S140, a PRACH transmission occasion corresponding to the target SSB is determined in the relationship mapping table as a target PRACH transmission occasion.

It may be understood that, the solution provided in the embodiments of the present disclosure may be applied in a scenario of 5G NR communication, where a UE operates in a Frequency Range 1 (FR1) and a network duplex mode is Time Division Dual (TDD). In this scenario, a target PRACH transmission occasion selected based on a selected target SSB needs to simultaneously satisfy the following three conditions: first, the PRACH transmission occasion needs to be in an uplink subframe; second, the PRACH transmission occasion needs to be subsequent to a time domain position of the selected SSB; thirdly, the PRACH transmission occasion needs to conform to a time domain position corresponding to Table 6.3.3.2-3 in the 3GPP protocol 38.211. The PRACH transmission occasion corresponds to a Random Access (RA) occasion, and is the occasion of a random access. The UE sends a preamble on a PRACH according to the determined target PRACH transmission occasion, so that the UE sends a random access request to the base station, thereby establishing a signalling connection between the UE and the base station.

It may be understood that, after the UE determines the target SSB, a PRACH transmission occasion corresponding to the target SSB is selected from the relationship mapping table as the target PRACH transmission occasion. Compared with the technical solution that a target transmission occasion is acquired through comparison and calculation according to screening conditions, the embodiments of the present disclosure may effectively save the calculation time of the PRACH transmission occasion, thereby ensuring the real-time performance of a baseband chip.

In addition, referring to Fig. 2, in an embodiment, the relationship mapping table in the embodiment illustrated with reference to in Fig. 1 may be acquired by, but is not limited to be acquired by, the following operations S210 to S240.

In operation S210, available PRACH transmission occasions are determined from the PRACH transmission occasions according to a preset screening rule.

In operation S220, a PRACH mapping configuration parameter of the one or more SSBs is determined, wherein the PRACH mapping configuration parameter represents a number of PRACH transmission occasions to be mapped corresponding to the one or more SSBs.

In operation S230, the one or more SSBs are mapped to the available PRACH transmission occasions according to the PRACH mapping configuration parameter, and generating mapping information.

In operation S240, the mapping information is saved to the relationship mapping table.

It may be understood that the PRACH transmission occasions need to satisfy the three screening conditions described in the embodiment of Fig. 1 and the background so as to be confirmed as available PRACH transmission occasions, and determining the available PRACH transmission occasions may provide an effective data basis for mapping of the one or more SSBs.

It may be understood that the PRACH mapping configuration parameter may be, for example, an Ssb_perRACH_Occasion parameter, and may correspondingly represent the number of SSBs that are able to be mapped on each PRACH transmission occasion. For example, when Ssb_perRACH_Occasion = 1, one SSB needs to be mapped on 1 PRACH transmission occasion; when Ssb_perRACH_Occasion = 1/N (N is a positive integer greater than 1), one SSB needs to be mapped on N PRACH transmission occasions; and when Ssb_perRACH_Occasion=N, N SSBs need to be mapped on 1 PRACH transmission occasion. Therefore, it is necessary to determine the PRACH mapping configuration parameter of each SSB to complete mapping of the one or more SSBs to the available PRACH transmission occasions.

It may be understood that, after the mapping between the one or more SSBs and the available PRACH transmission occasions is completed, information such as the number of available PRACH transmission occasions having a mapping relationship with the one or more SSBs, a starting symbol of each available PRACH transmission occasions having the mapping relationship with the one or more SSBs, a mapping period required for completing the mapping between the one or more SSBs and the available PRACH transmission occasions, a frame length of the mapping period, the number of mapping cycles in the mapping period, an index in a starting symbol array of the first available PRACH transmission occasion in the mapping period may be recorded as mapping information, and the mapping information is stored in the relationship mapping table, thereby providing an effective data basis for determining a target PRACH transmission occasion after the UE determines the target SSB.

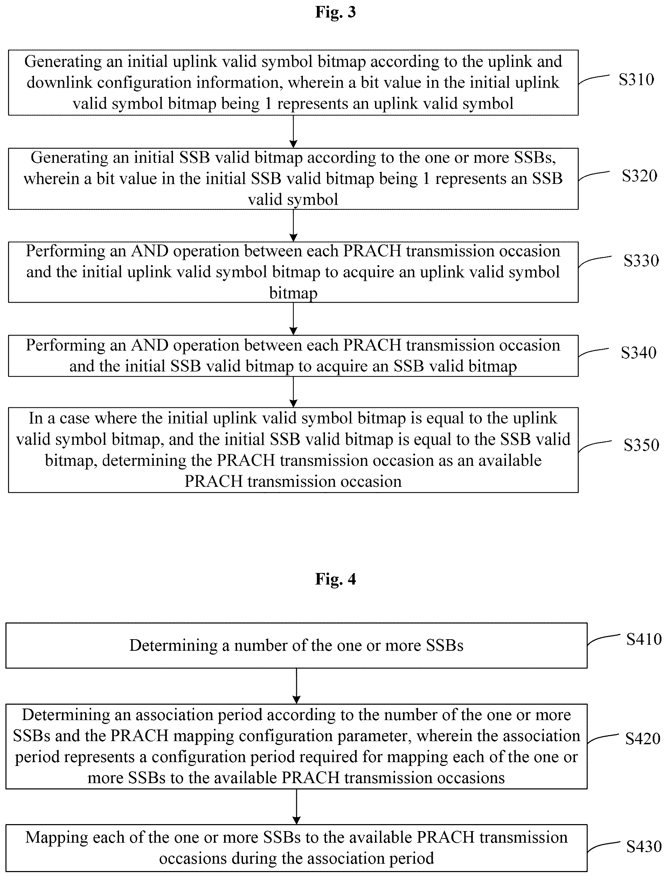

In addition, referring to Fig. 3, in an embodiment, the SIB may further include uplink and downlink configuration information, the operation S210 in the embodiment illustrated with reference to in Fig. 2 includes, but is not limited to, the following operations S310 to S350.

In operation S310, an initial uplink valid symbol bitmap is generated according to the uplink and downlink configuration information, wherein a bit value in the initial uplink valid symbol bitmap being 1 represents an uplink valid symbol.

In operation S320, an initial SSB valid bitmap is generated according to the one or more SSBs, wherein a bit value in the initial SSB valid bitmap being 1 represents an SSB valid symbol.

In operation S330, an AND operation is performed between each PRACH transmission occasion and the initial uplink valid symbol bitmap to acquire an uplink valid symbol bitmap.

In operation S340, an AND operation is performed between each PRACH transmission occasion and the initial SSB valid bitmap to acquire an SSB valid bitmap.

In operation S350, in a case where the initial uplink valid symbol bitmap is equal to the uplink valid symbol bitmap, and the initial SSB valid bitmap is equal to the SSB valid bitmap, the PRACH transmission occasions are determined as the available PRACH transmission occasions.

It should be noted that, uplink and downlink configuration information in the SIB includes uplink symbols and downlink symbols. Because the PRACH is an uplink channel, the available PRACH transmission occasions are required to be located on uplink valid symbols. Further, an uplink symbol is an uplink valid symbol only when the uplink symbol is spaced from a downlink symbol by Ngap symbols in length. Therefore, a bit value 1 in the initial uplink valid symbol bitmap represents an uplink valid symbol, and a bit value 0 in the initial uplink valid symbol bitmap represents a downlink symbol or an uplink symbol which fails to be spaced from a downlink symbol by Ngap symbols in length. It may be understood that acquiring the initial SSB valid bitmap may provide a data basis for selecting the available PRACH transmission occasions located on uplink symbols.

It should be noted that the embodiments of the present disclosure do not limit the specific size of the storage space for storing the initial uplink valid symbol bitmap. It may be understood that, the maximum value of an uplink configuration period is 20ms, and if the subcarrier interval under FR1 is 30 kHz, then 1ms corresponds to 28 symbols in length, and therefore, an array with a capacity of 20 elements with each element occupying 32 bits may be used to store the initial uplink valid symbol bitmap, and is capable of storing the maximum symbol amount within 20ms.

It should be noted that a bit value 1 in the initial SSB valid bitmap represents an SSB valid symbol that is spaced from the SSB by Ngap symbols in length, and a bit value 0 in the initial SSB valid bitmap represents an SSB symbol that fails to be spaced from the SSB by Ngap symbols in length. It may be understood that generating the initial SSB valid bitmap according to the one or more SSBs may provide a data basis for selecting the available PRACH transmission occasions after the time domain positions of the one or more SSBs.

It should be noted that, the embodiments of the present disclosure do not limit the specific size of the storage space for storing the initial SSB valid bitmap. It may be understood that, since the number of the SSB subframes included in each period under FR1 does not exceed 4, 1 subframe corresponding to 1ms, if the subcarrier interval under FR1 is 30kHz, 1ms corresponds to 28 symbols in length, and therefore an array with a capacity of 4 elements with each element occupying 32 bits may be used to store the initial uplink valid symbol bitmap, and is capable of storing the maximum symbol amount in the receiving period of the one or more SSBs.

An AND operation is performed between each PRACH transmission occasion and the initial uplink valid symbol bitmap to acquire an uplink valid symbol bitmap; an AND operation is performed between each PRACH transmission occasion and the initial SSB valid bitmap to acquire an SSB valid bitmap; and when the initial uplink valid symbol bitmap is equal to the uplink valid symbol bitmap, and the initial SSB valid bitmap is equal to the SSB valid bitmap, it represents that this PRACH transmission occasion simultaneously satisfies the screening condition of being located on an uplink subframe, and the screening condition of being subsequent to the time domain position of the SSB, and therefore is determined as an available PRACH transmission occasion, It may be understood that the selection of the available PRACH transmission occasions may provide an effective data basis for the establishment of the relationship mapping table of the mapping relationship between the one or more SSBs and the available PRACH transmission occasions.

In addition, referring to Fig. 4, in an embodiment, the operation S230 in the embodiment illustrated with reference to in Fig. 2 includes, but is not limited to, the following operations S410 to S430.

In operation S410, the number of the one or more SSBs is determined.

In operation S420, an association period is determined according to the number of the one or more SSBs and the PRACH mapping configuration parameter, wherein the association period represents a configuration period required for mapping each of the one or more SSBs to the available PRACH transmission occasions.

In operation S430, each of the one or more SSBs is mapped to the available PRACH transmission occasions during the association period.

It may be understood that, the association period represents a configuration period required for mapping of each of the one or more SSBs to the available PRACH transmission occasions. With reference to the description of the embodiment illustrated with reference to in Fig. 2, a manner of determining the association period according to the number of the one or more SSBs and the PRACH mapping configuration parameter is as follows: when the value of the Ssb_perRACH_Occasion parameter is 1/N, the number of PRACH transmission occasions of one mapping cycle (that is, the association period) is acquired multiplying the number of the one or more SSBs by N; when the value of the Ssb_perRACH_Occasion parameter is N, the number of PRACH transmission occasions of one mapping cycle (that is, the association period) is acquired by dividing the number of the one or more SSBs by N. Since it is difficult to store a decimal by software implementation, by taking one virtual PRACH transmission occasion as N actual PRACH transmission occasions, the association period is made equal to the number of the one or more SSBs.

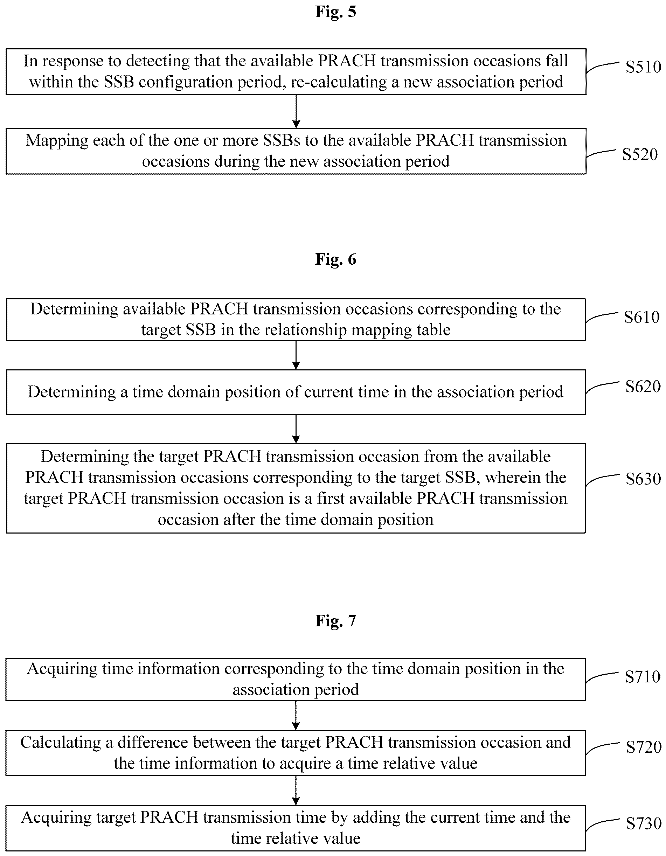

In addition, referring to Fig. 5, in an embodiment, the SIB may further include an SSB configuration period, the SSB configuration period being a period required for receiving the one or more SSBs; and the operation S430 in the embodiment illustrated with reference to in Fig. 4 includes, but is not limited to, the following operations S510 and S520.

In operation S510, in response to detecting that the available PRACH transmission occasions fall within the SSB configuration period, a new association period is re-calculated.

In operation S520, each of the one or more SSBs is mapped to the available PRACH transmission occasions during the new association period.

It may be understood that the SSB configuration period in the embodiments of the present disclosure corresponds to a period of an SSB burst set. There are six SSB configuration periods: 5ms, 10ms, 20ms, 40ms, 80ms and 160ms, which represent a certain period within which a set of SSBs are received, and the SSB configuration period may be determined according to the SIB sent by the base station. The present embodiment is described taking the SSB configuration period being 160ms as an example. When it is detected that the available PRACH transmission occasions fall within the SSB configuration period, it represents that the time domain positions of the available PRACH transmission occasions are before 160ms, which means that the available PRACH transmission occasions in the current association period cannot bear one SSB mapping cycle, and therefore the current association period is multiplied by 2 to acquire a new association period (because the association period is acquired according to the PRACH mapping configuration parameter, the association period should be an even number, and therefore, in the case where the current association period cannot bear the SSB mapping cycle, it is needed to double the length of the correlation period). When it is detected that the time domain position corresponding to the available PRACH transmission occasion is at the end of the SSB configuration period, that is, the time domain position of the available PRACH transmission occasion is at 160ms, it is determined that the available PRACH transmission occasion of the current association period can bear one SSB mapping cycle, mapping information such as the number of SSB mapping cycles in the current association period and a frame length of the association period is recorded, and the mapping information is stored in the relationship mapping table.

It may be understood that under the TDD configuration, the maximum value of the SSB configuration period, i.e., the maximum number of available PRACH transmission occasions within 160ms, is 768, since one available PRACH transmission occasion corresponds to one starting symbol, the starting symbols of the available PRACH transmission occasions may be stored by using one structure meeting the storage requirement defined by the maximum number, for example, by using an array with an element number of 768, so that storage requirements can be satisfied while reducing the occupation of a storage space.

For the number of available PRACH transmission occasions within 160ms, the starting symbols of valid PRACH transmission occasions within 160ms (because the maximum number of PRACH transmission occasions within 160ms is 768 under TDD configuration, hence, the starting symbols of valid PRACH transmission occasions within 160ms may be recorded by an array containing 768 elements), the number of association periods, a frame length of the association period, and the number of SSB mapping cycles in the association period, an index of the first valid PRACH transmission occasion within the association period in the starting symbol array of the valid PRACH transmission occasions within 160ms.

It may be understood that, after the available PRACH transmission occasions are determined by means of the technical solution in the embodiment illustrated with reference to Fig. 3, and before the available PRACH transmission occasions in each association period are counted and recorded, an index of the first available PRACH transmission occasion in the association period in a starting symbol array of valid PRACH transmission occasions in an SSB configuration period may be recorded, a starting symbol of the valid PRACH transmission occasion within an SSB configuration period (for example, 160ms) may also be recorded, one is added to an index in a starting symbol array of available PRACH transmission occasions within 160ms, and the total number of available PRACH transmission occasions corresponding to the time domain transmission occasion is added to the current statistics of the number of available PRACH transmission occasions.

In addition, referring to Fig. 6, in an embodiment, the operation S140 in the embodiment illustrated with reference to in Fig. 1 includes, but is not limited to, the following operations S610 to S630.

In operation S610, available PRACH transmission occasions are determined corresponding to the target SSB in the relationship mapping table.

In operation S620, a time domain position of current time in the association period is determined.

In operation S630, the target PRACH transmission occasion is determined from the available PRACH transmission occasions corresponding to the target SSB, wherein the target PRACH transmission occasion is a first available PRACH transmission occasion after the time domain position.

It may be understood that after the target SSB is determined, available PRACH transmission occasions corresponding to the target SSB are searched in the relationship mapping table; then taking the current time as a reference, by determining a time domain position of the current time in the association period, the first available PRACH transmission occasion after the time domain position is determined from the available PRACH transmission occasions as a target PRACH transmission occasion. Selecting the first available PRACH transmission occasion from a plurality of available PRACH transmission occasions corresponding to the time domain position corresponding to the current time, i.e., taking the available PRACH transmission occasion with the earliest time domain position as the target PRACH transmission occasion may effectively ensure the real-time performance of a baseband chip.

It may be understood that, considering that the maximum value of the SSB configuration period is 160ms, the current time may be located at the end of 160ms, when calculating and selecting the target PRACH transmission occasion from the available PRACH transmission occasions, the next 160ms may be entered, therefore, in the embodiments of the present disclosure, a time domain resource configuration period for determining a target PRACH transmission occasion is set, the length of the time domain resource configuration period may be 320ms. By adopting the period of 320ms, all PRACH transmission occasion configuration situations can be satisfied.

In addition, referring to Fig. 7, in an embodiment, after the operation S140 in the embodiment illustrated with reference to in Fig. 1, the PRACH transmission occasion determination method may further include, but is not limited to, the following operations S710 to S730.

In operation S710, time information corresponding to the time domain position in the association period is acquired.

In operation S720, a difference between the target PRACH transmission occasion and the time information is calculated to acquire a time relative value,
In operation S730, target PRACH transmission time is acquired by adding the current time and the time relative value.

Those having ordinary skill in the art can understand that the time information corresponding to the time domain position in the association period is acquired, that is, the time information corresponding to the time domain position of the current time in the association period is acquired, for example, when the current time is A(hours):B(minutes):C(seconds), the time domain position of A(hours):B(minutes):C(seconds) may be converted into corresponding time information within the association period by performing a modulo operation on the time domain position of A(hours):B(minutes):C(seconds). Assuming that the association period is 160ms, the current time A(hours):B(minutes):C(seconds) may be converted into 120ms, so as to provide an effective data basis for calculating the target PRACH transmission time.

It may be understood that a difference between the target PRACH transmission occasion and the time information is calculated to acquire a time relative value, and target PRACH transmission time is acquired by adding the current time and the time relative value, that is, an absolute time coordinate system is adopted and the current time is converted into time in the absolute time coordinate. After determining the target PRACH transmission occasion, a relative value of the target PRACH transmission occasion with respect to the current time is determined, thereby acquiring the target PRACH transmission time, that is, the target PRACH transmission occasion in a data format of milliseconds is converted into target PRACH transmission time in a data format of hours: minutes: seconds, thereby providing an efficient data basis for sending a preamble.

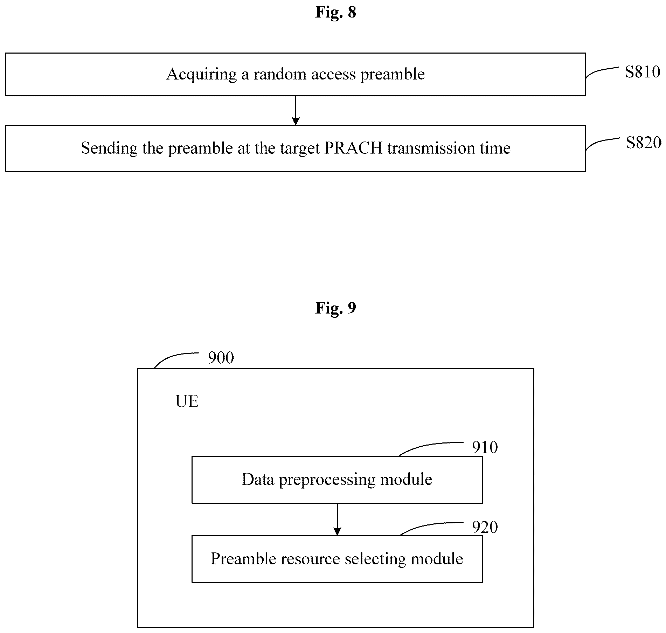

In addition, referring to Fig. 8, in an embodiment, after the operation S730 in the embodiment illustrated with reference to in Fig. 7, the PRACH transmission occasion determination method may further include, but is not limited to, the following operations S810 and S820.

In operation S810, a random access preamble (short as preamble) is acquired.

In operation S820, the preamble is sent at the target PRACH transmission time.

It may be understood that the PRACH configuration index information may further include preamble format information; the preamble is sent on a PRACH based on the target PRACH transmission time and according to the preamble format information, so that the UE sends a random access request to the base station, thereby establishing a signalling connection between the UE and the base station.

It should be noted that, those having ordinary skill in the art know the format configuration of the preamble, and details are not described herein again.

In addition, in order to describe the PRACH transmission occasion determination method provided by the above embodiments of the present disclosure in more details, the technical solution of the present disclosure will be described below with an embodiment.

Fig. 9 is a schematic diagram of modules of UE according to another embodiment of the present disclosure. As shown in Fig. 9, the UE 900 includes a data preprocessing module 910 and a preamble resource selecting module 920, functions of each module of the UE 900 are described below.

The data preprocessing module 910 is configured to, after receiving an SIB message sent by a base station, calculate mapping information related to PRACH transmission occasions which are able to be used for sending a preamble according to the SIB, and store the mapping information in a relationship mapping table. Since the SIB message includes uplink and downlink configuration information, the position of the SSBs and the PRACH configuration index, etc., when the preamble is selected, the relationship mapping table can be directly looked up, the time occupied by repeated calculation is saved.

The preamble resource selecting module 920 adopts a 320ms period configuration in Preamble resource calculation, which includes all configuration conditions. According to Table 6.3.3.2-3 in 3GPP protocol 38.211, the maximum SSB time domain period is 160ms, but the current time is still uncertain and therefore may be located at the end of the 160ms period, and during the calculation of the transmission occasion, the next 160ms may be entered, and therefore all PRACH configuration conditions can be covered in a period of 320ms. Furthermore, an absolute time coordinate system is adopted, the current time is converted into an absolute time coordinate, and after an available transmission occasion is selected by comparison, a relative value of the transmission occasion and the current time is acquired, thereby acquiring the sending time. In a case where the current time is uncertain, compared with the technical solution in which the available transmission time in a period is acquired with the current time as a reference, the method for calculating the PRACH transmission time in the present disclosure is simpler.

It should be noted that the operations of the method in Embodiment 1 are applied to the data preprocessing module 910 shown in Fig. 9, and the operations of the method in Embodiment 2 and Embodiment 3 are applied to the preamble resource selecting module 920 shown in Fig. 9.

### Embodiment 1

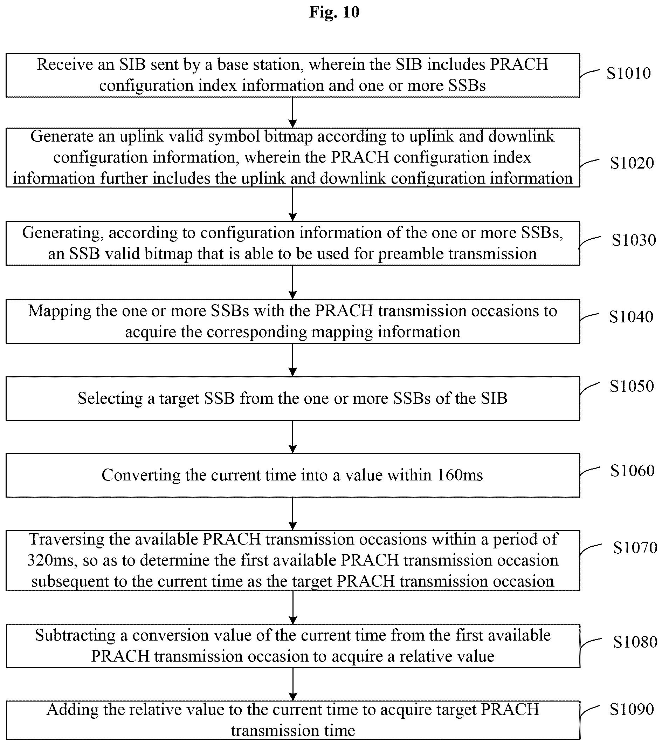

Referring to Fig. 10, Fig. 10 is a flowchart illustrating exemplary operations for determining target PRACH transmission time according to another embodiment of the present disclosure, the method includes the following operations S1010 to S1090.

In operation S1010, receiving an SIB sent by a base station, wherein the SIB includes PRACH configuration index information and one or more SSBs, and the PRACH configuration index information includes information such as a preamble format, a frame period, a frame offset, a starting symbol, a PRACH transmission occasion of each time slot, and/or a duration.

In operation S1020, further including uplink and downlink configuration information in the PRACH configuration index information, wherein the uplink and downlink configuration information corresponds to a TDD-UL-DL-configuration parameter; and generating an uplink valid symbol bitmap according to the uplink and downlink configuration information. Since the maximum value of an uplink symbol configuration cycle is 20ms, the subcarrier interval is 30kHz under FR1, and 1ms corresponds to 28 symbols in length, and therefore, an array with a storage capacity of 20 elements, each element occupying 32 bits, may be adopted for storage, wherein each element represents one subframe, and each bit in the subframe corresponds to one symbol, if a corresponding bit is 1, it represents that the corresponding symbol is able to be used for preamble transmission.

In operation S1030, generating, according to configuration information of the one or more SSBs, an SSB valid bitmap that is able to be used for preamble transmission, wherein no more than four SSB subframes are included in each period under the FR1, an array with a storage capacity of four elements, each element occupying 32 bits, may be adopted for storage, wherein each element represents one subframe, each bit in the subframe corresponds to one symbol, and if the corresponding bit is 1, it represents that the corresponding symbol is able to be used for preamble transmission.

In operation S1040, mapping the one or more SSBs with the PRACH transmission occasions to acquire the number of available PRACH transmission occasions within 160ms, the starting symbol of each available PRACH transmission occasion within 160ms (because the maximum number of PRACH transmission occasions within 160ms in the TDD configuration is 768, hence, an array with a storage capacity of 768 elements is adopted for storage), the number of association periods, a frame length of the association period, the number of SSB mapping cycles within the association period, and an index of a first available PRACH transmission occasion within the association period in a starting symbol array of available PRACH transmission occasions within 160ms, wherein the association period represents the configuration period(s) needed to map the respective SSBs to the available PRACH transmission occasions.

It may be understood that, for a calculation manner of the association period, reference may be made to the description of the embodiment illustrated with reference to Fig. 4. For example, when the value of the Ssb_perRACH_Occasion parameter is 1/N, the number of PRACH transmission occasions needed to be mapped in one cycle, that is, the association period, is N times the number of SSBs; when the value of the Ssb_perRACH_Occasion parameter is N, the number of PRACH transmission occasions needed to be mapped in one cycle, that is, the association period, is acquired by dividing the number of SSBs by N. Since it is difficult to store a decimal by software implementation, by taking one virtual PRACH transmission occasion as N actual PRACH transmission occasions, the association period is made equal to the number of SSBs.

In operation S1050, selecting a target SSB from the one or more SSBs of the SIB.

In operation S1060, converting the current time into a value within 160ms.

In operation S1070, traversing the available PRACH transmission occasions within a period formed by the current 160ms and the next 160ms (i.e., the time domain resource configuration period for determining the target PRACH transmission occasion is taken as 320ms), so as to determine the first available PRACH transmission occasion subsequent to the current time as the target PRACH transmission occasion.

In operation S1080, subtracting a conversion value of the current time from the first available PRACH transmission occasion to acquire a relative value;
In operation S1090, adding the relative value to the current time to acquire target PRACH transmission time.

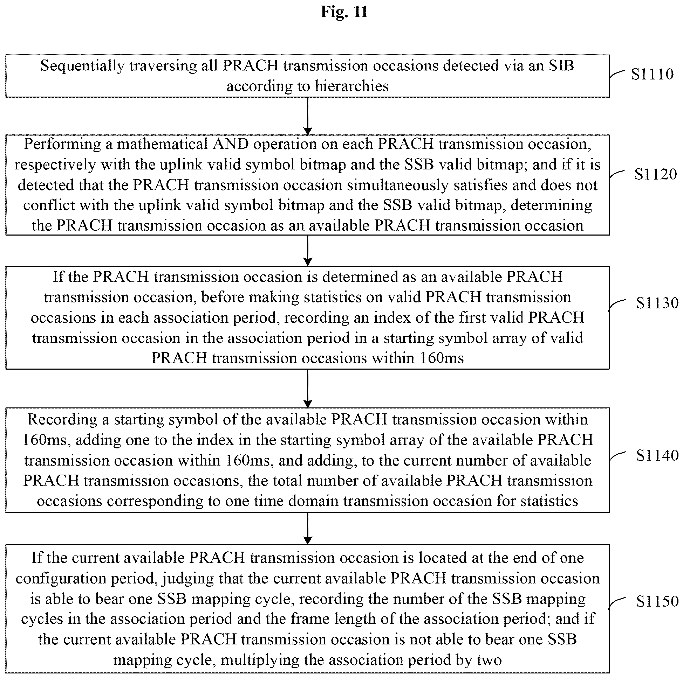

Embodiment 2, referring to Fig. 11, Fig. 11 is a flowchart illustrating exemplary operations for implementing mapping between an SSB and available PRACH transmission occasions according to another embodiment of the present disclosure, the method includes the following operations S1110 to S1150.

In operation S1110, sequentially traversing all PRACH transmission occasions detected via an SIB according to hierarchies, wherein the hierarchies include: a first layer which is a configuration period within 160ms, a second layer which is the number of subframes within the configuration period, a third layer which is the number of PRACH time slots within a subframe, and a fourth layer which is the number of PRACH transmission occasions within one time slot.

In operation S1120, performing a mathematical AND operation on each PRACH transmission occasion, respectively with the uplink valid symbol bitmap generated in operation S1020 and the SSB valid bitmap generated in operation S1030; and if it is detected that the PRACH transmission occasion simultaneously satisfies and does not conflict with the uplink valid symbol bitmap and the SSB valid bitmap, determining the PRACH transmission occasion as an available PRACH transmission occasion.

It may be understood that, for a manner of detecting whether a PRACH transmission occasion conflicts with the uplink valid symbol bitmap and the SSB valid bitmap, reference may be made to the description of the embodiment illustrated with reference to Fig. 3, and no further details are provided herein.

In operation S1130, if the PRACH transmission occasion is determined as an available PRACH transmission occasion, before making statistics on valid PRACH transmission occasions in each association period, recording an index of the first valid PRACH transmission occasion in the association period in a starting symbol array of valid PRACH transmission occasions within 160ms.

In operation S1140, recording a starting symbol of the available PRACH transmission occasion within 160ms, adding one to the index in the starting symbol array of the available PRACH transmission occasion within 160ms, and adding, to the current number of available PRACH transmission occasions, the total number of available PRACH transmission occasions corresponding to one time domain transmission occasion for statistics.

In operation S1150, if the current available PRACH transmission occasion is located at the end of one configuration period, judging that the current available PRACH transmission occasion is able to bear one SSB mapping cycle, recording the number of the SSB mapping cycles in the association period and the frame length of the association period; and if the current available PRACH transmission occasion is not able to bear one SSB mapping cycle, multiplying the association period by two.

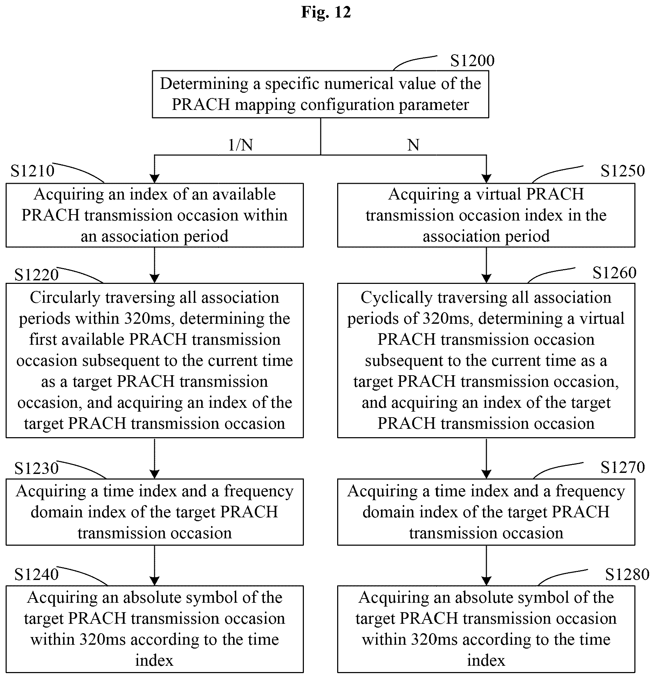

Embodiment 3, referring to Fig. 12, Fig. 12 is a flowchart illustrating exemplary operations for determining a target PRACH transmission occasion from available PRACH transmission occasions according to another embodiment of the present disclosure, the method includes the following operations S1200 to S1280.

In operation S1200, determining a specific numerical value of the PRACH mapping configuration parameter, i.e., the Ssb_perRACH_Occasion parameter.

In operation S1210, when the value of the PRACH mapping configuration parameter is 1/N, acquiring an index of an available PRACH transmission occasion within an association period, wherein the index of the available PRACH transmission occasion is equal to the index of the mapping cycle of the SSB in the association period multiplied by the number of SSBs multiplied by N, plus the index of the selected SSB multiplied by N.

In operation S1220, circularly traversing all association periods within 320ms, determining the first available PRACH transmission occasion subsequent to the current time as a target PRACH transmission occasion, and acquiring an index of the target PRACH transmission occasion.

In operation S1230, acquiring a time index and a frequency domain index of the target PRACH transmission occasion, wherein the time index is equal to the index of the first available PRACH transmission occasion in the association period in the starting symbol array of the available PRACH transmission occasions within 160ms added with the index of the PRACH transmission occasion in the association period divided by the number of transmission occasions in the frequency domain, and the frequency domain index is a modulus of the index of the available PRACH transmission occasion in the association period divided by the number of transmission occasions in the frequency domain.

In operation S1240, acquiring an absolute symbol of the target PRACH transmission occasion within 320ms according to the time index, wherein the absolute symbol is acquired by substituting the time index into the starting symbol array of the available PRACH transmission occasions within 160ms recorded in the data preprocessing module.

In operation S1250, when the value of the PRACH mapping configuration parameter is N, acquiring a virtual PRACH transmission occasion index in the association period, wherein the virtual PRACH transmission occasion index is equal to the index of the mapping cycle of the SSB in the association period multiplied by the number of SSBs, plus the index of the selected SSB.

In operation S1260, cyclically traversing all association periods of 320ms, determining a virtual PRACH transmission occasion subsequent to the current time as a target PRACH transmission occasion, and acquiring an index of the target PRACH transmission occasion;

In operation S1270, acquiring a time index and a frequency domain index of the target PRACH transmission occasion, wherein the time index is equal to the index of the first available PRACH transmission occasion in the association period in the starting symbol array of the available PRACH transmission occasions within 160ms added with the index of the available PRACH transmission occasion in the association period divided by the product of the number of transmission occasions in the frequency domain and N, and the frequency domain index is a modulus of the index of the available PRACH transmission occasion in the association period divided by the product of the number of transmission occasions in the frequency domain and N.

In operation S1280, acquiring an absolute symbol of the target PRACH transmission occasion within 320ms according to the time index, wherein the absolution symbol is acquired by substituting the time index into the starting symbol array of available PRACH transmission occasions within 160ms recorded in the data preprocessing module.

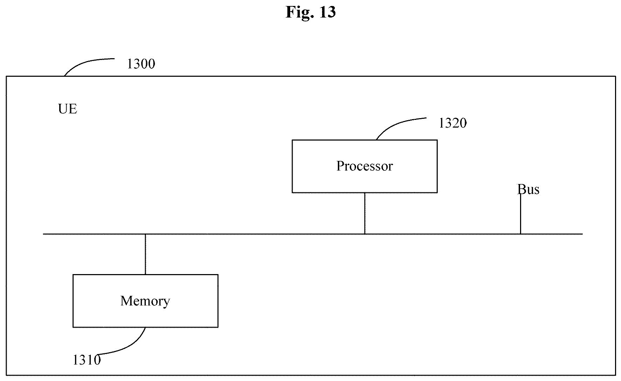

In addition, referring to Fig. 13, Fig. 13 is a structural diagram of UE according to another embodiment of the present disclosure, an embodiments of the present disclosure provides a UE 1300, the UE 1300 includes: a memory 1310, a processor 1320, and a computer program that is stored on the memory 1310 and runs on the processor 1320.

The processor 1320 and the memory 1310 may be connected via a bus or other means.

A non-transitory software program and instructions needed to implement the PRACH transmission occasion determination method of the above embodiments are stored in the memory 1310, The non-transitory software program and instructions, when executed by the processor 1320, perform the PRACH transmission occasion determination method applied to the UE 1300 in the foregoing embodiments, for example, perform the method operations S110 to S140 in Fig. 1, the method operations S210 to S240 in Fig. 2, the method operations S310 to S350 in Fig. 3, the method operations S410 to S430 in Fig. 4, the method operations S510 to S520 in Fig. 5, the method operations S610 to S630 in Fig. 6, the method operations S710 to S730 in Fig. 7, the method operations S810 to S820 in Fig. 8 described above.

The apparatus embodiments described above are merely exemplary, and the units described as separate parts may be or may not be physically separate, may be located in one position, or may be distributed on a plurality of network units. A part or all of the modules may be selected according to actual needs to achieve the objectives of the solutions of the embodiments.

In addition, an embodiment of the present disclosure provides a computer readable storage medium, the computer readable storage medium stores computer executable instructions, the computer executable instructions are executed by a processor 1320 or a controller, for example, by a processor 1320 in the foregoing embodiment of the UE1300, the foregoing processor 1320 may be caused to perform the PRACH transmission occasion determination method applied to the UE 1300 in the foregoing embodiments, for example, perform the method operations S110 to S140 in Fig. 1, the method operations S210 to S240 in Fig. 2, the method operations S310 to S350 in Fig. 3, the method operations S410 to S430 in Fig. 4, the method operations S510 to S520 in Fig. 5, the method operations S610 to S630 in Fig. 6, the method operations S710 to S730 in Fig. 7, the method operations S810 to S820 in Fig. 8 described above. Those having ordinary skill in the art may understand that all or some of the operations and systems in the methods disclosed in the foregoing may be implemented as software, firmware, hardware, and a proper combination thereof. Some or all of the physical components may be implemented as software executed by a processor, such as a central processor, digital signal processor, or microprocessor, or as hardware, or as an integrated circuit, such as an application specific integrated circuit. Such software may be distributed on computer readable media, which may include computer storage media (or non-transitory media) and communication media (or transitory media). As is well known to those of ordinary skill in the art, the term computer storage media includes both volatile and nonvolatile, removable and non-removable media implemented in any method or technology for storage of information such as computer readable instructions, data structures, program modules, or other data. Computer storage media includes, but is not limited to, Random Access Memory (RAM), Read-Only Memory (ROM), Electrically Erasable Programmable Read-Only Memory (EEPROM), flash memory or other memory technology, Compact Disc Read-Only Memory (CD-ROM), Digital Versatile Discs (DVD) or other optical disk storage, magnetic cassettes, magnetic tape, magnetic disk storage or other magnetic storage devices, or any other medium which can be used to store the desired information and which can be accessed by a computer. In addition, communication media typically embodies computer readable instructions, data structures, program modules, or other data in a modulated data signal such as a carrier wave or other transport mechanism and may include any information delivery media as is known to those of ordinary skill in the art.

Embodiments of the present disclosure include a PRACH transmission occasion determination method, a UE, and a computer readable storage medium. The PRACH transmission occasion determination method includes: acquiring a System Information Block (SIB) sent by a base station, wherein the SIB includes one or more Synchronization Signal Blocks (SSBs) and PRACH configuration index information, and the PRACH configuration index information includes PRACH transmission occasions; generating a relationship mapping table, wherein the relationship mapping table represents a mapping relationship between the one or more SSBs and the PRACH transmission occasions; determining a target SSB from the one or more SSBs according to a preset condition; and determining a PRACH transmission occasion corresponding to the target SSB in the relationship mapping table as a target PRACH transmission occasion. According to the solution provided in the embodiments of the present disclosure, after selecting a target SSB, an available PRACH transmission occasion corresponding to the target SSB is searched and selected from a relationship mapping table as a target PRACH transmission occasion. Compared with the technical solution that a comparison calculation needs to be performed according to multiple screening conditions to acquire a target PRACH transmission occasion, the technical solution provided in the embodiments of the present disclosure may effectively save the calculation time of the PRACH transmission occasion, thereby ensuring the real-time performance of a baseband chip.

Although some implementations of the present disclosure have been described above, the present disclosure is not limited to the above implementations, those having ordinary skill in the art can make various equivalent modifications or replacements without departing from the scope of the present disclosure, these equivalent modifications or replacements are all included in the scope defined in the claims of the present disclosure.

## Claims

1. A Physical Random Access Channel, PRACH, transmission occasion determination method, applied to User Equipment, UE, and comprising:
acquiring a System Information Block, SIB, sent by a base station, wherein the SIB comprises one or more Synchronization Signal Blocks, SSBs, and PRACH configuration index information, and the PRACH configuration index information comprises PRACH transmission occasions;
acquiring a preset relationship mapping table, wherein the relationship mapping table represents a mapping relationship between the one or more SSBs and the PRACH transmission occasions;
determining a target SSB from the one or more SSBs according to a preset condition; and
determining a PRACH transmission occasion corresponding to the target SSB in the relationship mapping table as a target PRACH transmission occasion.

2. The PRACH transmission occasion determination method according to claim 1, wherein the relationship mapping table is acquired according to following operations:
determining available PRACH transmission occasions from the PRACH transmission occasions according to a preset screening rule;
determining a PRACH mapping configuration parameter of the one or more SSBs, wherein the PRACH mapping configuration parameter represents a number of PRACH transmission occasions to be mapped corresponding to the one or more SSBs;
mapping the one or more SSBs to the available PRACH transmission occasions according to the PRACH mapping configuration parameter, and generating mapping information; and
saving the mapping information to the relationship mapping table.

3. The PRACH transmission occasion determination method according to claim 2, wherein the SIB further comprises uplink and downlink configuration information, and the determining available PRACH transmission occasions from the PRACH transmission occasions according to a preset screening rule comprises:
generating an initial uplink valid symbol bitmap according to the uplink and downlink configuration information, wherein a bit value in the initial uplink valid symbol bitmap being 1 represents an uplink valid symbol;
generating an initial SSB valid bitmap according to the one or more SSBs, wherein a bit value in the initial SSB valid bitmap being 1 represents an SSB valid symbol;
performing an AND operation between each PRACH transmission occasion and the initial uplink valid symbol bitmap to acquire an uplink valid symbol bitmap;
performing an AND operation between each PRACH transmission occasion and the initial SSB valid bitmap to acquire an SSB valid bitmap;
in a case where the initial uplink valid symbol bitmap is equal to the uplink valid symbol bitmap, and the initial SSB valid bitmap is equal to the SSB valid bitmap, determining the PRACH transmission occasion as an available PRACH transmission occasion.

4. The PRACH transmission occasion determination method according to claim 2, wherein the mapping the one or more SSBs to the available PRACH transmission occasions according to the PRACH mapping configuration parameter comprises:
determining a number of the one or more SSBs;
determining an association period according to the number of the one or more SSBs and the PRACH mapping configuration parameter, wherein the association period represents a configuration period required for mapping each of the one or more SSBs to the available PRACH transmission occasions; and
mapping each of the one or more SSBs to the available PRACH transmission occasions during the association period.

5. The PRACH transmission occasion determination method according to claim 4, wherein the SIB further comprises an SSB configuration period, the SSB configuration period being a period required for receiving the one or more SSBs; and the mapping each of the one or more SSBs to the available PRACH transmission occasions during the association period comprises:
in response to detecting that the available PRACH transmission occasions fall within the SSB configuration period, re-calculating a new association period; and
mapping each of the one or more SSBs to the available PRACH transmission occasions during the new association period.

6. The PRACH transmission occasion determination method according to claim 4, wherein the determining a PRACH transmission occasion corresponding to the target SSB in the relationship mapping table as a target PRACH transmission occasion comprises:
determining available PRACH transmission occasions corresponding to the target SSB in the relationship mapping table;
determining a time domain position of current time in the association period; and
determining the target PRACH transmission occasion from the available PRACH transmission occasions corresponding to the target SSB, wherein the target PRACH transmission occasion is a first available PRACH transmission occasion after the time domain position.

7. The PRACH transmission occasion determination method according to claim 6, wherein after the determining a PRACH transmission occasion corresponding to the target SSB in the relationship mapping table as a target PRACH transmission occasion, the PRACH transmission occasion determination method further comprises:
acquiring time information corresponding to the time domain position in the association period;
calculating a difference between the target PRACH transmission occasion and the time information to acquire a time relative value; and
acquiring target PRACH transmission time by adding the current time and the time relative value.

8. The PRACH transmission occasion determination method according to claim 7, wherein after the acquiring target PRACH transmission time by adding the current time and the time relative value, the PRACH transmission occasion determination method further comprises:
acquiring a random access preamble; and
sending the preamble at the target PRACH transmission time.

9. User Equipment, UE, comprising a memory, a processor and a computer program stored in the memory and capable of running on the processor, wherein the processor, when executing the computer program, is configured to implement the PRACH transmission occasion determination method according to any one of claims 1 to 8.

10. A computer readable storage medium, storing computer executable instructions, wherein the computer executable instructions are used for executing the PRACH transmission occasion determination method according to any one of claims 1 to 8.
